# EUROPEAN PATENT SPECIFICATION

(11) **EP 3 761 038 B1**
(45) Date of publication and mention of the grant of the patent: **25.10.2023**
(21) Application number: 19184462.0
(22) Date of filing: 04.07.2019
(51) Int. Cl.: G01N 35/00, G01M 3/26

(54) **TECHNIQUES FOR CHECKING STATE OF ANALYZERS**
TECHNIKEN ZUR ÜBERPRÜFUNG DES ZUSTANDS VON ANALYSATOREN
TECHNIQUES DE VÉRIFICATION DE L'ÉTAT D'ANALYSEURS

(43) Date of publication of application: 06.01.2021
(73) Proprietor: F. Hoffmann-La Roche AG, 4070 Basel (CH); Roche Diagnostics GmbH, 68305 Mannheim (DE)
(72) Inventor: LEINENBACH, Andreas, 82377 Penzberg (DE); KAMINSKI, Marc, 82377 Penzberg (DE); VAN DOORN, Aart Pieter, 82377 Penzberg (DE)
(74) Representative: Peterreins Schley

(56) References cited:
- US-A- 5 866 004
- US-A1- 2018 340 916
- US-B1- 8 333 210

## Description

### Technical Field

This disclosure relates to automated methods for checking a state of an analyzer including multiple liquid chromatography (LC) streams.

### Background

Analyzers including multiple liquid chromatography (LC) streams coupled to one or more detectors (e.g., a mass spectrometer) are becoming more and more popular in recent years in clinical or laboratory settings. This means that the analyzers are becoming more and more automated. Furthermore, a required throughput of the analyzers increases and the analyzers can de designed to process many different types of samples and carry out different assays or tests (if possible in a random access mode in which different assays or tests can be processed in a random manner depending on the requirements of the facility hosting a particular analyzer). These increasing requirements regarding the performance of analyzers including multiple LC streams are met with analyzers of considerable complexity. Particularly a fluid path for processing the samples in the LC streams of analyzers designed to satisfy the above listed demands can be relatively complex. This means that errors or malfunctions in the analyzers might be harder to detect and resolve. Frequently, operators on premise are not trained to carry out these complicated service tasks or spare parts required are not present. This in turn can prolong downtimes of the analyzer and reduce the analyzers' productivity. Monitoring the leak-tight worthiness of pumps and other mechanical or fluid-containing components of liquid chromatography systems is known from US 2018/340916 A1.

### Summary

The matter for which protection is sought is defined in the appended claims.

In one general aspect, the present invention relates to an automated method for identifying a clot or a leak in an analyzer including multiple liquid chromatography (LC) streams, the method includes obtaining an indication of a trigger event for a clot or leak detection routine and starting a clot or leak detecting routine in response to the trigger event. The clot or leak detecting routine is designed to identify a location of the clot or leak out multiple possible positions by using one or more sensors of the analyzer. The method further includes providing information regarding the identified location of the clot or leak for further processing.

In a second general aspect, the present invention relates to a computing system being configured to perform the steps of the method of the first general aspect.

The technique of the first and second general aspects can have advantageous technical effects. Firstly, the techniques of the present disclosure can reduce a downtime of an analyzer by efficiently detecting a clot or leak and indicating its position to an operator. In this manner, the cause of the clot or leak can be removed and the analyzer can return to normal operation more quickly. In some prior art analyzers clot or leak detection is a largely manual process which can be fairly time consuming.

Secondly, the techniques of the present disclosure can allow that operators having less knowledge regarding the inner workings of the analyzers carry out the service or maintenance. This might be of particular importance as the complexity of today's analyzers can mean that personnel capable of performing the equally complex service and maintenance operations is not available on premise. This can lead to prolonged downtimes of the analyzers. The techniques of the present disclosure can reduce a level of skill needed to perform a service or maintenance operation by identifying a location of a clot or a leak (and possibly also indicating which service or maintenance operation is needed). The extent to which an operator has to work through the complex inner workings of the analyzer can be reduced.

Several terms are used as having a particular meaning in the present disclosure.

In the present disclosure, a "clot" restricts a fluid path of the analyzer to below its normal fluid conveyance capacity. A clot can block a fluid path completely, but this is not necessarily the case. In other words, a clot partially or fully blocks a fluid path of the analyzer.

A "leak" as used in the present disclosure relates to an inadvertent passageway from the fluid path to the ambient environment. In operation, a leak can result in fluid escaping the fluid path to the outside environment or fluid (e.g., a gas) entering the fluid path from the ambient environment. The latter case can result in bubble formation inside the fluid path. The fluid loss of the fluid path or fluid entry into the fluid path is above a predetermined acceptable threshold. Ideally, the fluid path would not lose any liquid unless this is expressly desired (e.g., at a purge valve). However, it is understood that a real world fluid path never is perfectly closed.

An "analyzer" according to the present disclosure is a - usually at least partially automated - apparatus dedicated to perform an analytical function. The analyzers of the present disclosure include multiple LC streams.

In some examples, the analyzers can be configured to carry out to the analysis of samples (e.g., samples for in vitro diagnostics). For example, an analyzer can be a clinical diagnostics system for performing vitro diagnostics.

The analyzers of the present disclosure can have different configurations according to the need and/or according to the desired workflow. Additional configurations may be obtained by coupling a plurality of apparatuses and/or modules together. A "module" is a work cell, typically smaller in size than the entire analyzer, which has a dedicated function. This function can be analytical but can be also pre-analytical or post-analytical or it can be an auxiliary function to any of the pre-analytical function, analytical function or post-analytical function. In particular, a module can be configured to cooperate with one or more other modules for carrying out dedicated tasks of a sample processing workflow, e.g. by performing one or more pre-analytical and/or analytical and/or post-analytical steps.

In particular, the analyzers can comprise one or more analytical devices, designed to execute respective workflows that are optimized for certain types of analysis.

The analyzer can include analytical apparatuses for one or more of clinical chemistry, immunochemistry, coagulation, hematology, etc.

Thus, the analyzer may comprise one analytical apparatus or a combination of any of such analytical apparatuses with respective workflows, where pre-analytical and/or post analytical modules may be coupled to individual analytical apparatuses or be shared by a plurality of analytical apparatuses. In alternative pre-analytical and/or post-analytical functions may be performed by units integrated in an analytical apparatus. The analyzer can comprise functional units such as liquid handling units for pipetting and/or pumping and/or mixing of samples and/or reagents and/or system fluids, and also functional units for sorting, storing, transporting, identifying, separating, detecting.

The term "sample" refers to a biological material suspected of containing one or more analytes of interest and whose detection, qualitative and/or quantitative, may be associated to a particular condition (e.g., a clinical condition).

The sample can be derived from any biological source, such as a physiological fluid, including, blood, saliva, ocular lens fluid, cerebral spinal fluid, sweat, urine, milk, ascites fluid, mucous, synovial fluid, peritoneal fluid, amniotic fluid, tissue, cells or the like. The sample can be pretreated prior to use, such as preparing plasma from blood, diluting viscous fluids, lysis or the like; methods of treatment can involve filtration, centrifugation, distillation, concentration, inactivation of interfering components, and the addition of reagents. A sample may be used directly as obtained from the source in some cases or following a pretreatment and/or sample preparation workflow to modify the character of the sample, e.g. after adding an internal standard, after being diluted with another solution or after having being mixed with reagents e.g. to enable carrying out one or more in vitro diagnostic tests, or for enriching (extracting/separating/concentrating) analytes of interest and/or for removing matrix components potentially interfering with the detection of the analyte(s) of interest.

The term "sample" is tendentially used to indicate a sample before sample preparation whereas the term "prepared sample" is used to refer to samples after sample preparation. In non-specified cases the term "sample" may generally indicate either a sample before sample preparation or a sample after sample preparation or both. Examples of analytes of interest are vitamin D, drugs of abuse, therapeutic drugs, hormones, and metabolites in general. The list is however not exhaustive.

In particular, the analyzer can comprise a sample preparation station for the automated preparation of samples. A "sample preparation station" is a pre-analytical module coupled to one or more analytical apparatuses or a unit in an analytical apparatus designed to execute a series of sample processing steps aimed at removing or at least reducing interfering matrix components in a sample and/or enriching analytes of interest in a sample. Such processing steps may include any one or more of the following processing operations carried out on a sample or a plurality of samples, sequentially, in parallel or in a staggered manner: pipetting (aspirating and/or dispensing) fluids, pumping fluids, mixing with reagents, incubating at a certain temperature, heating or cooling, centrifuging, separating, filtering, sieving, drying, washing, resuspending, aliquoting, transferring, storing...)

A sample may be provided for example in sample containers such as sample tubes, including primary tubes and secondary tubes, or multi-well plates, or any other sample carrying support. Reagents may be arranged for example in the form of containers or cassettes containing individual reagents or group of reagents and placed in appropriate receptacles or positions within a storage compartment or conveyor. Other types of reagents or system fluids may be provided in bulk containers or via a line supply.

Unless specified differently in the respective context, the terms "about" in connection with values for parameters means to include a deviation of +/- 10% from the specified value in the present disclosure.

### Description of the Drawings

**FIG. 1** is a flow diagram illustrating the methods for identifying a clot or a leak in an analyzer according to the present disclosure.
**FIG. 2** illustrates an example complex analyzer including multiple LC streams.
**FIG. 3** is a flow diagram illustrating an example clot or leak detecting routine according to the present disclosure.
**FIG. 4a** illustrates a further example complex analyzer including multiple LC streams.
**FIG. 4b** illustrates different stages of an example clot or leak detecting routine according to the present disclosure.
**FIG. 5a** and **FIG. 5b** show example valves which can be used in the clot or leak detecting routines according to the present disclosure.

### Detailed Description

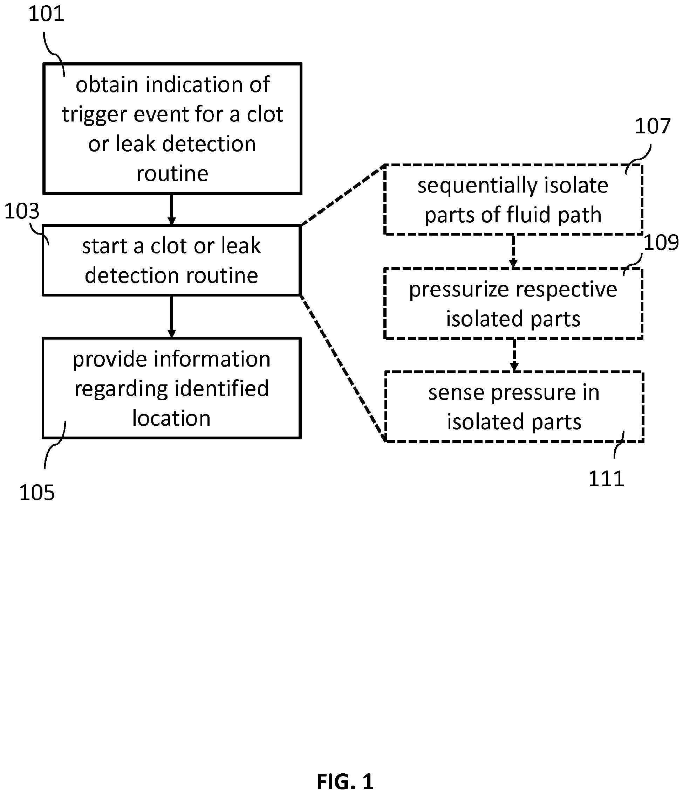

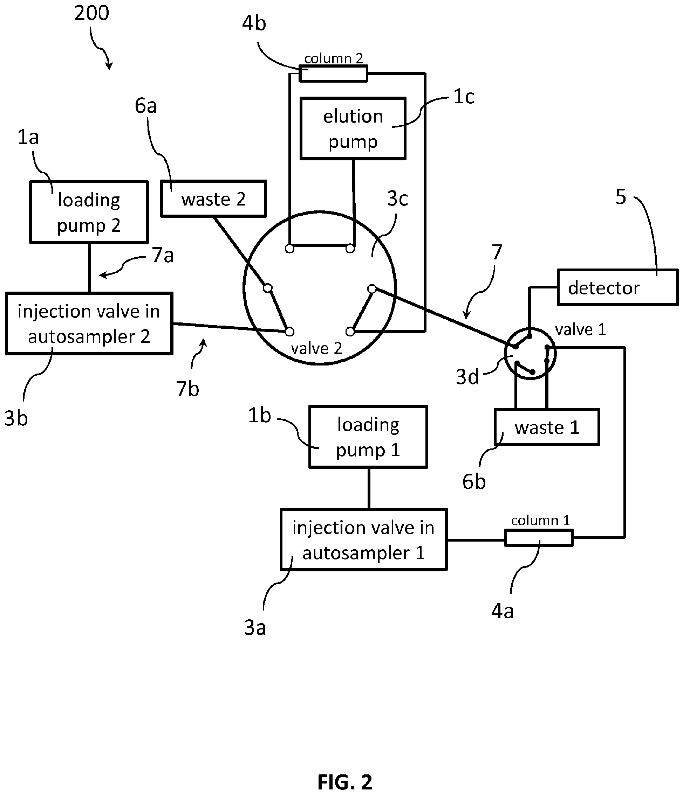

First, an overview over the methods for identifying a clot or a leak in an analyzer according to the present disclosure will be given in connection with **FIG. 1****.** Next, in connection with **FIG. 2** to **FIG. 4b****,** different aspects of the clot or leak detecting routines according to the present disclosure will be discussed.

### General Overview

**FIG. 1** is a flow diagram illustrating the methods for identifying a clot or a leak in an analyzer according to the present disclosure.

The automated method includes obtaining 101 an indication of a trigger event for a clot or leak detection routine, starting 103 a clot or leak detecting routine in response to the trigger event and providing 105 information regarding the identified location of the clot or leak for further processing. The clot or leak detecting routine is designed to identify a location of the clot or leak out multiple possible positions by using one or more sensors of the analyzer.

The clot or leak detection routine can include different (sub-)steps. Some examples will be discussed in the next sections.

In general, the clot or leak detecting routine can include switching multiple valves of the analyzer in a predetermined order and measuring pressure values by using at least one of the one or more sensors at different positions of the analyzer for different switching states of the multiple switches. The valves can include any type of valve suitable for handling fluids in an analyzer including multiple LC streams. Likewise, the sensors can include any sensor suitable for detecting a pressure. In some examples, a pressure sensor can be arranged directly at a pump (e.g., to fulfill other monitoring functions). Multiple pressure sensors can be distributed in different parts of the fluid path. Further examples valves and sensors that can be present in the analyzers of the present invention will be discussed below in connection with **FIG. 2****,** **FIG. 4a** and **FIG. 5a** and 5b.

In some examples, the clot or leak detecting routine includes sequentially isolating different parts of a fluid path of the analyzer. In addition or alternatively, the clot or leak detecting routine can include isolating a first part of a fluid path of the analyzer and sequentially increasing the isolated part by adding further parts of the fluid path. The first part includes a pressure sensor of the one or more sensors of the analyzer. The routine can include sequentially pressurizing the respective isolated parts and sensing a pressure in the respective isolated parts to detect a clot or leak.

These general ideas for the clot or leak detection routine will be explained next. As discussed, the analyzers of the present disclosure include a complex fluid path (e.g., for providing and transporting samples, for providing and transporting samples a mobile phase into which the sample is injected and transporting the respective fluids to a LC column and a detector). To effect fluid transport along this fluid path, one or more pumps (e.g., multiple pumps) and a plurality of valves can be present in the analyzer. In addition, at one or more positions of the fluid path pressure sensors can be arranged. In some examples, one or more of the pumps are equipped with pressure sensors.

By switching the valves in a predetermined order as discussed above, the techniques of the present disclosure partition the fluid path so that a particular part includes at least one pump and at least one pressure sensor. The at least one pump can be used to pressurize the part of the fluid path. Then, a clot or leak in the particular part of the fluid path would lead to a particular behavior when the particular part of the fluid path is pressurized. For instance, the particular behavior can be a pressure rise above a predetermined threshold or a pressure drop below a predetermined threshold.

For instance, the particular part can include a pump connected to an inlet port to a valve by a length of tubing or a capillary. Now, the clot or leak detecting routine can include switching the valve to connect the inlet port to a waste container. Thus, the isolated part of the fluid path includes the pump, the length of tubing or the capillary connecting the pump and the inlet port, the valve and the waste container. Then, the pump is turned on to pressurize the isolated part. When no clot or leak is present, a particular pressure behavior is expected for the so prepared part of the fluid path. For instance, a static pressure might fall as the pump generates an unobstructed fluid stream along the isolated part. In other examples, a pressure might rise (slightly) as fluid is pressurized by the pump. However, if a clot is present in the isolated part of the fluid path, a pressure might rise more sharply as the pump pumps fluid into the clogged fluid path. This difference between an expected behavior if the isolated part of the fluid path is clear compared to if a cot is present can be registered in the clot or leak detecting routine of the present disclosure. Furthermore, a position of a clot can be specified (i.e., in the respective isolated part of the fluid path).

A leak detection routine can operate similarly. For instance, instead of switching the valve to connect the inlet port to waste container in the example above, the valve can be switched to a closed position (creating a "dead end" at the valve for the length of tubing or capillary). Thus, the isolated part of the fluid path includes the length of tubing or capillary. Then, the pump pressurizes the isolated part. An expected behavior is a particular pressure rise (as a closed length of tubing is pressurized in case no leak is present). However, if a leak is present a pressure rise might be less pronounced or even no pressure rise at all can be detected in some examples as fluid can escape through the leak. In this manner, a difference between an expected behavior and a detected behavior can be indicative of a leak in the isolated part of the fluid path.

In some examples, a single pressurization or measurement can be sufficient to detect both a leak or a clot in a particular position in the fluid path. For example, a behavior of the pressure in an isolated part of the fluid path can be analyzed to detect two types of deviations from an expected behavior, the first one being indicative of a clot (e.g., a higher or shaper than expected pressure rise) and the second one being indicative of a leak (e.g., a lower or slower than expected pressure rise).

Now, the clot or leak detecting routine can include a sequential check of different parts of the fluid path as discussed above. On the one hand, the clot or leak detecting routine can include checking a first part in first stage and afterwards adding one or more additional parts to the first parts which are sequentially checked. In this case, if the first part is clear (i.e., no clot or leak detected) a difference from the expected behavior when pressurizing a longer part of the fluid path including the first part (or a portion thereof) can be indicative for a clot or leak being present in the added part of the fluid path. Therefore, a difference from an expected behavior after the adding an additional part of the fluid path has been added can be indictive of a clot or leak present in the added part of the fluid path. In some examples, multiple additional parts of the fluid path can be added and scrutinized sequentially.

On the other hand, as the fluid path of the analyzer can include multiple pumps and sensors, the clot or leak detecting routine can also include isolating disjunct parts of the fluid path and performing the clot and/or leak detection steps discussed herein. In some examples, the clot or leak detecting routine can include scrutinizing multiple disjunct parts of the fluid path at the same time.

The clot or leak detecting routine can follow a particular logic in some examples. For instance, sequentially isolating and/or adding parts of the fluid path of the analyzer can include starting with an injection part for a sample of the analyzer and continuing with other parts downstream of the injection part. In other examples, sequentially isolating and/or adding different parts of the fluid path of analyzer can include starting with a part adjacent to a detector (e.g., a mass spectrometer) of the analyzer and continuing with other parts upstream of the part adjacent to the detector (e.g., the mass spectrometer). In the previous sections different aspects of the clot and/or leak detection routine of the present disclosure have been discussed. In the following sections, the analyzers in which the techniques of the present disclosure can be employed will be discussed in more detail.

### Example analyzers

**FIG. 2** illustrates an example complex analyzer 200 including multiple LC streams. In the example of **FIG. 2** the analyzer has two different LC streams each including a LC column 4a, 4b. As can be seen, column 4a is connected to an autosampler including an injection valve 3a (i.e., a fluid path exists between the respective column and the autosampler). The autosampler 3a is configured to add an aliquot of a sample or a complete sample to the fluid path of the analyzer in an automated manner. For example, the autosampler can include components of the sample preparation station discussed in the summary section above (e.g., a dispenser for removing a sample or an aliquot of a sample from a vessel including the sample). In addition or alternatively, the analyzer can have a manual sample port (e.g., a port to connect a syringe to add the sample).

In addition, the autosamplers of **FIG. 2** are connected to a respective loading pumps 1b. The loading pump can provide a mobile phase to which the sample or the aliquot of the sample is added (e.g., a mixture of one or more organic components and an aqueous component).

The column 4a is connected to a first rotary valve 3d which can connect the column 4a to a detector 5 for performing an analytical operation on the sample, or to a first waste container 6b for disposing fluid. Thus, the first column 4a is part of a first LC stream.

Moreover, the analyzer 200 of **FIG. 2** includes a second LC stream including the second column 4b.This LC path includes in part similar elements as the first LC path. For example, a second autosampler including a second injection valve 3b is connected with a second loading pump 1a. However, in the case of the second LC path a second rotary valve 3c is connected to the second autosampler to connect the autosampler either to a second waste container 6a or to further downstream components. For instance, a sample or sample aliquot prepared by the autosampler can be received in a sample loop connected to the second rotary valve 3c and in a subsequent operation injected into the second LC column 4b by using an elution pump 1c. Downstream of the second column 4b the fluid path continuous through the second and first rotary valves 3c, 3d to the detector 5. As can be seen, the first rotary valve 3d operates as a stream selection valve in the analyzer 200 of **FIG. 2** which can connect either the first LC stream including the first column 4a or the second LC stream including the second LC column 4a to the detector 5.

As can be seen, the analyzer 200 of **FIG. 2** includes a relatively complex fluid path 7 which can include different configurations depending on the state of the different valves included in the analyzer 200. However, the analyzer 200 of **FIG. 2** is only an example of an analyzer including multiple LC streams. In other examples, an analyzer according to the present disclosure can include only some of the components shown in **FIG. 2****,** or additional ones of the components shown in **FIG. 2****,** or a different configuration of the fluid path compared to the example fluid path in **FIG. 2****.** Moreover, it should be pointed out that the representation of the fluid path and the setup in **FIG. 2** is only schematic (e.g., additional components can be present between two components connected by a fluid path).

Now, a clot or leak detecting routine according to the present disclosure might include sequentially checking different parts of the fluid path 7 of the analyzer 200 of **FIG. 2****.** For instance, in one step the injection valve in the second autosampler 3b can be set to a purge position to generate a fluid connection connecting the second loading pump 1a and the autosampler to an ambient environment. This isolates a first part 7a of the fluid path 7. Then, the second loading pump 1a is activated to pressurize the first part 7a and the resulting pressure can be measured (e.g., by a pressure sensor of the second loading pump 1a). Based on the measured pressure a clot can be detected is present in the first part 7a. In addition or alternatively, a leak can be detected in the first part 7a if present. For example, a sharp or pronounced pressure rise can indicate that a clot is present in the first part 7a of the fluid path 7 which is supposed to be open if all elements of the first part 7a were clear.

In a further step, the injection valve in the second autosampler 3b can be opened to connect the first part 7a of the fluid path and a second part 7b of the fluid path including a loop in the second rotary valve 3c and the second waste container 6a. Then, the combined first and second parts 7a, 7b of the fluid path 7 are pressurized by loading pump 1a and the resulting pressure is detected. As discussed above, the resulting pressure can be used to find out if a clot or leak is present in the second part 7b of the fluid path 7 (assuming that the first part 7a is clear). As explained above, this process can continue to check further parts of the fluid path.

Moreover, the analyzer 200 includes multiple pumps 1a-c, and the clot or leak detecting routine can include activating different ones of the multiple pumps sequentially to pressurize different parts of the analyzer. For example, a part of the fluid path 7 starting at the elution pump 1c or the first loading pump 1b can be isolated and checked in the same manner as discussed above. Hereby a location of a clot or leak can be identified. The identified location can be one of a capillary of the analyzer, an LC column of the analyzer, a fluid loop of the analyzer and a pump of the analyzer. In other examples, the position can be a part of the fluid path including two or more of these components or a portion of these components. For instance, a clot or leak at an input or output port of a valve can be a detected location of a clot or a leak in some examples. In other examples, a location can be a portion of a tubing or capillary.

The granularity of the location detection routine can depend on the number of valves, sensors and pumps that are available in a particular analyzer.

In the above examples, a pressure sensor of the analyzer is used to detect a pressurization behavior of a part of the fluid path of an analyzer to detect a location of a clot or leak. However, instead of detecting the pressure directly by appropriate pressure sensor other sensors of the analyzer can be employed in other examples as long as they are capable of distinguishing a situation in which an isolated part of the fluid path behaves as expected when pressurized by a connected pump from a situation in which a clot blocks the part of the fluid part partially or completely (or in which a leak opens an additional fluid path to the ambient environment of the part of the fluid path). For instance, a flow sensor can be used to make this distinction in some examples. In addition or alternatively, a humidity sensor or a liquid level sensor can used in some examples.

In the preceding sections, the deviation of the behavior of the pressure which can be used to identify a clot or leak at a particular position of the fluid path of an analyzer has already been discussed. In the subsequent passages some further aspects of how the clot or leak detection can take place will be explained.

For clot detection, a speed of a pressure rise or a magnitude of a pressure rise can be evaluated. For example, if the magnitude of a pressure rise is above a certain threshold, a presence of a clot can be determined. In the same manner, if a speed of a pressure rise is above a certain threshold (i.e., the pressure rises more sharply than expected), a presence of a clot can be detected. In other examples, a time series of pressure values during a pressurization of an isolated part of the fluid path can be evaluated.

In a similar manner as for clot detection, a speed of a pressure rise or a magnitude of a pressure rise can be evaluated for leak detection. However, in this case, if the magnitude of a pressure rise is below a certain threshold, a presence of a leak can be determined. In the same manner, if a speed of a pressure rise is below a certain threshold (i.e., the pressure rises more slowly than expected or not at all), a presence of a leak can be detected. In other examples, a time series of pressure values during a pressurization of an isolated part of the fluid path can be evaluated for leak detection as well.

In some examples, instead of a binary detection (e.g., "no clot at position A" or "clot at position A") a magnitude of restriction can be determined. In the same manner, a magnitude of a leak can be determined instead of a binary leak detection. For instance, a pressurization behavior might yield a particular magnitude or speed of a pressure rise which is indicative of a partial occlusion of the part of the fluid path.

In addition or alternatively, a magnitude or speed of a pressure rise can be used to infer a position of a clot or leak within a predetermined isolated part of the fluid path. For instance, a clot at a position directly downstream of a sensor located at a pump might yield a different pressurization behavior from a clot somewhat more removed from the sensor located at the pump (as, e.g., a volume of the fluid path which is pressurized is smaller in the first case). In some examples, the techniques of the present disclosure can involve a dynamic analysis of the pressurization behavior of an isolated part of the fluid path to infer a degree of a clot or a leak or a position of the clot or leak within the isolated part of the fluid path, or both. In other examples, the clot or leak detecting routine "merely" yields a binary bit of information for each of the isolated parts of the fluid path (e.g., if a clot is present in the respective path or not or if a leak is present in the respective part or not).

A sub-class of the leak detection is bubble detection according to the present disclosure. The rationale is that bubbles in the fluid path are generated by leaks (usually relatively small ones). Thus, if bubbles appear in an isolated part of the fluid path that means a leak is present in the respective isolated part. This can be detected by the leak detection techniques as discussed in the present disclosure. Therefore, all techniques discussed herein for leak detection can be also employed for the particular case of leak detection being bubble detection.

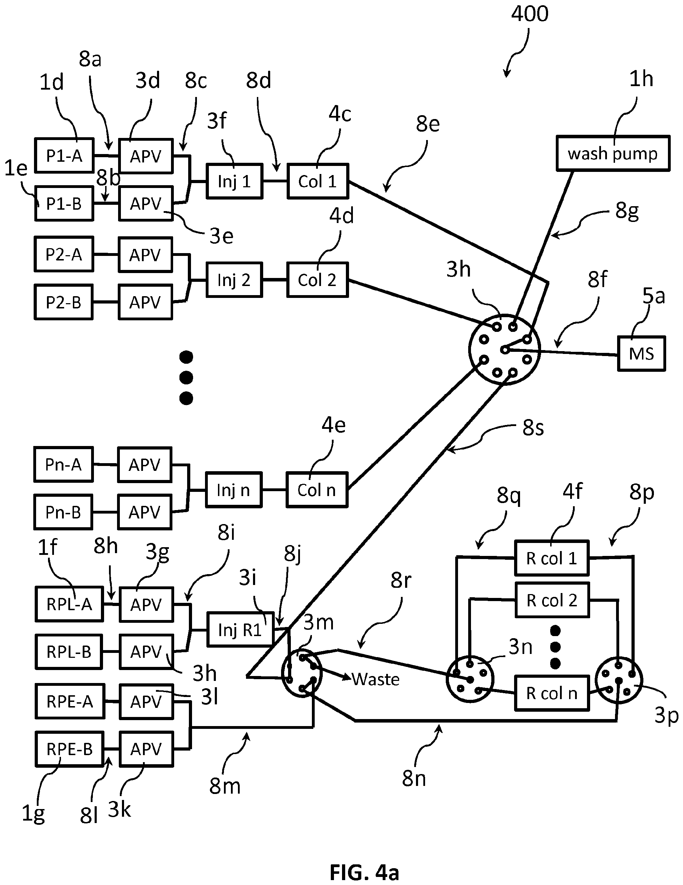

As discussed above, the techniques of identifying a clot or a leak in an analyzer can be employed in many different layouts of fluid paths of analyzers including multiple LC streams. **FIG. 4a** illustrates a further example complex analyzer 400 including multiple LC streams.

In the example of **FIG. 4a****,** the analyzer includes a first plurality (n) of LC streams each including a single LC column 4c-e which are connected by a stream selection valve 3h to a detector 5a (which can be a mass spectrometer). Thus, the first plurality of LC stream can be multiplexed to the detector 5a. Each of the first plurality of LC streams includes a loading portion which is equipped with two loading pumps (e.g., loading pumps "P1-A" and "P1-B" for a first LC stream of the first plurality of LC streams). The loading pumps 1d, 1e of each LC stream provide a mobile phase to which the sample or the aliquot of the sample is added. For instance, the first loading pump 1d of each LC stream can be arranged to provide an aqueous component of a mobile phase. The second loading pump 1e of each LC stream can be configured to provide an organic component of the mobile phase. A larger or smaller number of loading pumps can be provided in other examples.

Each of the loading pumps can be connected to an auto-purge valve 3d, 3e by a capillary 8a, 8b. In the following capillaries will be discussed as connection elements between the components of the LC device. However, any component suitable to establish a fluid connection between the respective components can be used.

The first loading pump 1d is connected to a first auto-purge valve 3d through a first capillary 8a. The second loading pump 1e is connected to a second auto-purge valve 3d through a second capillary 8b.

Moreover, each LC stream has an injection valve 3f (e.g., as part of an autosampler of the respective stream) and a LC column 4c-4e. The respective injection valve is connected to both auto-purge valves of a respective LC stream. For example, a first injection valve 3f can be connected to the first and second auto-purge valves 3d, 3e through a third capillary 8c. The third capillary 8c can include a mixing element for mixing substances provided by the loading pumps 1d-g, e.g., the aqueous and organic components of the mobile phase.

Each injection valve is connected to a respective LC column. For instance, the first injection valve 3f is connected to the first LC column 4c through a fourth capillary 8d. Moreover, the first column is connected through the stream selection valve 3h through a fifth capillary 8e. The stream selection valve 3h is coupled to the detector 5a and a wash pump 1h through sixth and seventh capillaries 8f, 8g, respectively. A fluid path of the first LC stream extends from, the first and second loading pumps 1d, 1e through the first to sixth capillaries to he detector 5a while traversing the respective components coupled by the capillaries.

The analyzer of **FIG. 4a** includes further LC streams which can be configured as the first LC stream.

In addition, the analyzer includes a second plurality of LC streams. In the example of **FIG. 4a** the second plurality of LC streams are rapid LC streams which are configured differently than the first plurality of LC streams (as rapid LC streams in the example of **FIG. 4a****).**

On the one hand, the second plurality of LC streams has a single set of loading pumps 1f connected to an injection valve 3i for adding a sample or an aliquot of a sample to a fluid path by respective capillaries 8h, 8i. Auto-purge valves are arranged between each loading pump 1f and the injection valve. In addition, the second plurality of LC streams include an elution pump connected to the injection valve 3i (not shown in **FIG. 4a****)** configured to transport a sample to the different rapid columns 4f and to the detector 5.

The second plurality of LC streams includes a further rotary valve 3m to connect either the injection valve 3i or the elution pumps 1g (which will be discussed below) to a respective LC column and two multi-port valves 3n, 3p to select an LC stream of the second plurality of LC streams and to connect the LC streams to the detector.

Moreover, the second plurality of LC streams includes a set of elution pumps 1g connected to respective auto-purge valves in the same manner as the loading pumps. The elution pumps are not coupled to an injection valve but directly to the rotary valve 3m (over capillary 8m).

In operation, either the load part (including the injection valve 3i) or the elute part are connected to one of the rapid LC columns (e.g., a first rapid LC column 4f) by switching the rotary valve 3m and the first and second multiport valves 3p, 3n. The processing of samples includes a first phase in which the sample is loaded to the respective rapid LC column and a second phase in which the elute part is connected to the respective rapid LC column.

Again, the setup shown in **FIG. 4a** is only exemplary and can be varied, e.g., by adding further LC streams or removing LC streams or changing the components or setup of the different LC streams.

In an analyzer including multiple LC streams as shown in **FIG. 4a****,** the clot or leak detection routine can include repeating a clot or leak detecting (sub-)routine for each LC stream. This can happen in a sequential manner, or, if possible, in parallel.

### Example clot or leak detection routines

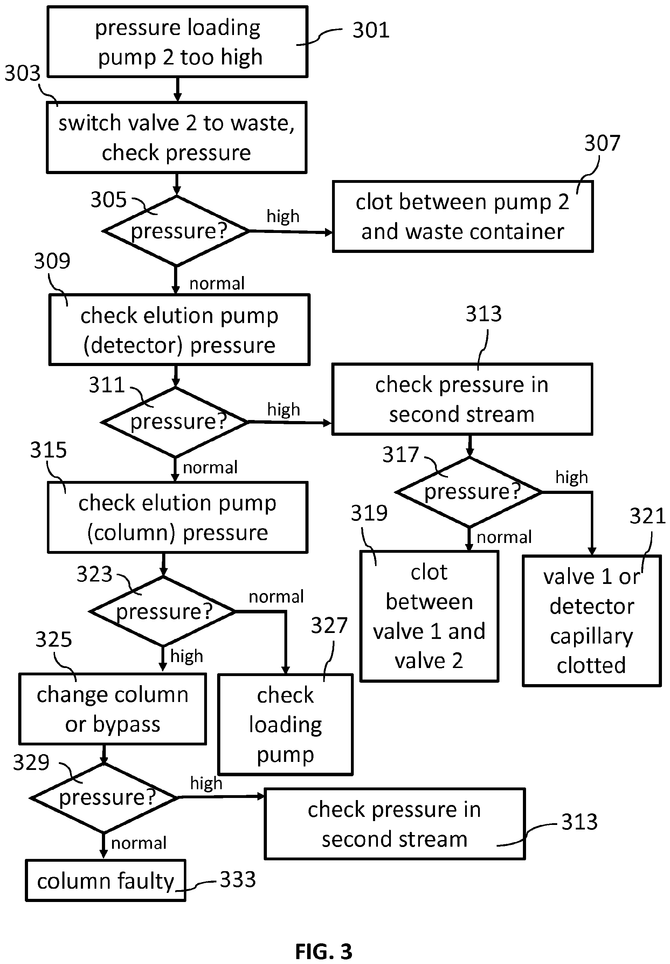

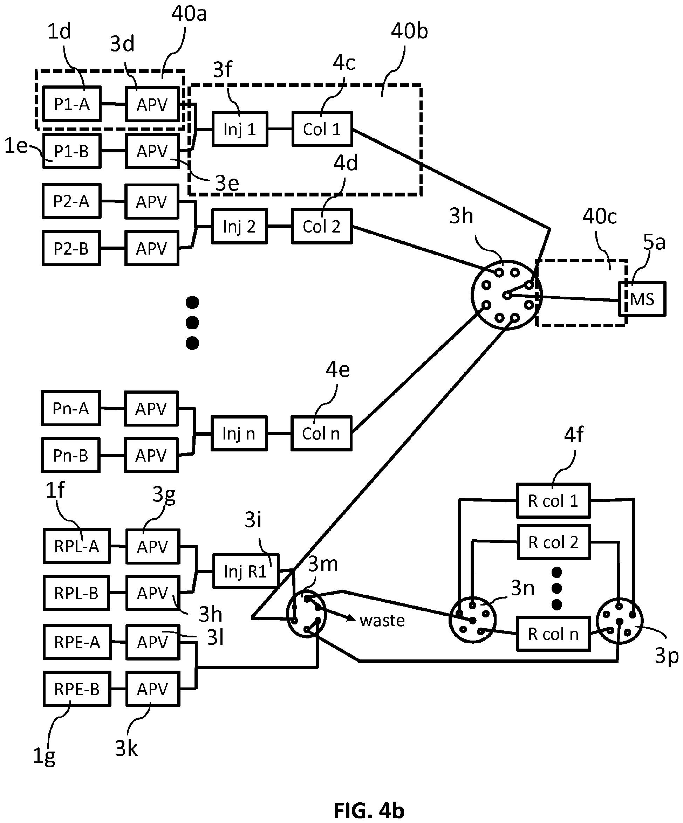

In connection with **FIG. 3** and **FIG. 4b** different concrete examples of clot or leak detection routines will be explained.

**FIG. 3** is a flow diagram illustrating an example clot or leak detecting routine according to the present disclosure for the analyzer in **FIG. 2****.**

The process can start with detecting 301 that a pressure at the second loading pump 1a is too high (i.e., above a predetermined threshold). In response to this trigger event, a clot detection routine is automatically started.

In a first step, the second valve 3c is connected 303 to the second waste container 6a. This isolates a part of the fluid path including fluid connections 7a, 7b (e.g., capillaries). The so isolated part of the fluid path (which can be seen in **FIG. 2****)** is pressurized and the pressurization behavior is monitored 305. If a pressure exceeds a predetermined level, a position of a clot between the second loading pump 1a and the second waste container 6a is detected.

If the pressure behaves normally, the clot detection routine proceeds. In a further step, the elution pump 1c is connected 309 to the detector 5 without including the second LC column 4b (not depicted in **FIG. 2****).** This isolates a second part of the fluid path including the first and second valves and the connection elements. The second part of the fluid path is pressurized (e.g., by the elution pump 1c) and the pressurization behavior is monitored 311.

If the pressure is high, the clot detection routine proceeds to checking the pressure in the second LC stream of the analyzer of **Fig. 2** including the first loading pump 1b, the first injection valve 3a, the first column 4a and the first rotary valve 3d. This clot detection (sub-)routine can include multiple steps for detecting a position of clot in the second LC stream (which will not be discussed in detail herein). If the pressure is high, a position of the clot is detected 321 to be at the first valve 3d or a fluid connection to the detector 5. If the pressure is normal, a position of the clot is detected 319 to be between the first valve 3d and the second valve 3c.

Returning to the case when a pressure is normal while the elution pump 1c is connected to the detector. Then, in a next step, the elution pump is switched to the second column 4b which in turn is connected to the detector 5 over the first and second rotary valves 3d, 3c. A pressure is checked 315 in this part of the fluid path (this situation is depicted in **FIG. 2****).**

If the pressure in this part of the fluid path behaves normally, the first loading pump 1a is checked 327 a second time (e.g., to confirm the trigger event). If the pressure is high, the second column 4b is changed or bypassed 325. The pressure check is repeated 329. If the repeated pressure check yields a normal pressure, the column is determined 333 to be faulty (e.g., clogged). If the pressure is high. The clot detection routine proceeds to checking the pressure in the second LC stream 3113 as discussed above.

As can be seen, the clock detection routine of the present disclosure can automatically detect a position of clog in an analyzer as shown in **FIG. 2****.** The clot detection routine can have additional steps. For example, in a first step a longer part of the fluid path can be isolated and checked. If the pressure behaves abnormally, the longer part can be divided in multiple shorter parts which can be checked (e.g., sequentially). This can allow for a more fine-grained positioning of a clot. For example, the part of the fluid path extending from the second loading pump 2 to the second waste container 6a in the example above can be further sub-divided in a clot detection routine.

The clot or leak detection routine can be adapted to arbitrary analyzers having different fluid paths. In the subsequent sections, a further example of a clot detection routine will be discussed in connection with the analyzer of **FIG. 4a****.**

As discussed above, the analyzer of **FIG. 4a** includes two pluralities of differently configured LC streams. The first plurality of streams (upper left side of **FIG. 4a****)** can be checked by a clot detection routine as follows.

In a first step, the first auto-purge valve 3d is switched to an ambient environment. This isolates a first part 40a of the fluid path a shown in **FIG. 4b****.** The first loading pump 1d is pressurized. If the pressure behaves normally, no clot (or leak) is present in the first part (and particularly the first capillary 8a). If the pressure behaves abnormally, a clot or leak is present in the first part.

The same procedure can be performed for the other loading pumps and auto-purge valves (e.g., the second loading pumps and auto-purge valves 1e, 3e) sequentially or in parallel. In this manner, a clot in the second capillary 8b or further capillaries connecting the loading pumps to respective auto-purge valves can be detected.

In a further step, the first auto-purge valve 3d is switched to connect the first loading pump 1d to first injection valve 3f. The second auto-purge valve 3e is switched to connect the second loading pump 1e to the first injection valve 3f. In addition the first injection valve is switched to provide a fluid connection between the first and second loading pumps and the first LC column 4c. Moreover, the stream selection valve 3h is switched to waste to establish a fluid connection between the first LC column 4c and a waste container (not shown in **FIG. 4a****).** This isolates a second part 40b of the fluid path (indicated in **FIG. 4b****)** which is subsequently pressurized by the loading pumps 1d, le. If the pressure behaves abnormally, a position of a clot (or leak) is detected as located in the third to fifth capillaries 8c, 8d, 8e or the components in between the third to fifth capillaries 8c, 8d, 8e. For example, the first LC column 4c might be clogged. Even though the first and second capillaries 8a, 8b also are in the part of the fluid path pressurized, these elements have already been cleared in a preceding step. In this manner, the clot or leak detection routine can assume that the clot must be located downstream (i.e., in the components discussed above).

If the pressure behaves normally, in a further step of the clot or leak detection routine, the injection valve 3f switches to establish a connection between an elution pump (not shown in **FIG. 4a****)** and the first LC column 4c (while the first LC column 4c remains connected to the waste container (not shown in **FIG. 4a****)).** This isolates a further portion of the fluid path of the analyzer. If the pressure behaves abnormally, an injector loop connected to the first injection valve 3f might include a clot.

If the pressure behaves normally, the stream section valve 3h is switched to provide a fluid connection to the mass spectrometer 5a. This generates a further isolated part (40c in **FIG. 4b****)** of the fluid path extending from the first injection valve 3f to the mass spectrometer 5a (via the first LC column 4c and the stream selection valve 3h). The further isolated part is pressurized by the elution pump and the pressure is monitored. As shown in **FIG. 4b****,** an abnormal pressure behavior is indicative of a clot (or leak) in the seventh capillary 8f or the mass spectrometer 5a (e.g., an injection assembly of the mass spectrometer 5a).

The clot detection routine can be repeated (sequentially or at least partially in parallel) for the further LC streams of the first plurality of LC streams of the analyzer.

In a further step, the wash pump 1h is switched to provide a fluid connection to a waste container (not shown in **FIG. 4a****).** This generates another isolated portion of the fluid path including the eight capillary 8g. The other isolated part of the fluid path is pressurized. If the pressure behaves abnormally, a clot (or leak) is located in the eighth capillary 8g. This concludes the clot or leak detection routine for the first plurality of LC streams.

While a particular order of steps has been discussed above, this order can also be changed unless the clot or leak detection routine requires a particular order. For example, the clot or leak detection routine could start with isolating a longer part of the fluid path and sequentially isolate smaller parts of the longer part. In addition or alternatively, different steps discussed as a sequential operation above can be carried out at least partially in parallel.

The clot or leak detection routine for the second plurality of LC streams (rapid LC streams) depicted in the lower half of **FIG. 4a** is (partially) different from the clot or leak detection routine for the first plurality of LC streams discussed above.

In a first step, the loading pumps and auto-purge valves can be checked in the same manner as discussed above (as these components have a similar setup for both pluralities of LC streams). This can be used to detect a clog or leak in the capillaries connecting these components (e.g., capillary 8h). In a further step, the injection valve 3i and the rotary valve 3m are switched to establish a fluid connection between a waste container and the loading pumps 1f. This isolates a further part of the fluid path including the capillaries 8i, 8j, so that clots (or leaks) in the capillaries can be detected.

If the pressure in this isolated part of the fluid path is determined to be normal, the injection valve 3i is switched to connect an elution pump (not shown in **FIG. 4a****)** over the injection valve 3i to the waste container. If the pressure in this part behaves abnormally, a clot (or leak) in an injector loop connected to the injection valve 3m is detected.

In further steps, the rotary valve 3m established a fluid connection between the loading elements and the first multiport valve 3p. In addition, the first and second multiport valves 3p, 3n are switched to establish a fluid connection over one of the rapid LC column arranged in parallel in the second plurality of LC streams (e.g., the first rapid LC column 4f) back to the rotary clave 3m and to the waste container (this fluid path is indicated in **FIG. 4a****).** In this manner, a further part of the fluid path is isolated and can be pressurized. An abnormal pressure behavior in the subsequent pressurization indicates that a clot (or leak) is located in the respective capillaries connecting the rapid LC column (e.g., the first rapid LC column 4f) and the first and second multiport valves 3p, 3n or the respective rapid LC column.

The same procedure can be repeated for the remaining rapid LC columns to find out if a clot (or leak) is present in the respective capillaries connecting the rapid LC column (and the first and second multiport valves 3p, 3n or the respective rapid LC column.

In a further step of the clot or leak detection routine the, the elute pumps 1g and the capillaries connecting the elute pumps to the rapid LC stream are checked.

### Trigger events

The clot or leak detection routine can be triggered by different trigger events.

In some examples, the trigger event can be an event detected by a controller of the analyzer. In this case, the routine can be automatically started upon occurrence of trigger event detected by the analyzer. The trigger event can be a particular sensor readout of a sensor of the analyzer. For example, the trigger event can be that a pressure in the analyzer is abnormal. An abnormal pressure can be a pressure crossing a predetermined upper or lower limit. In addition or alternatively, an abnormal pressure can include a speed of a pressure rise or pressure drop faster or slower than a predetermined value.

In some examples, the sensor can be a pressure sensor of a pump (e.g., a load pump or an elution pump of the analyzer). In this case, the analyzer can start the clot or leak detection routine automatically whenever the pressure readout deviates from a predetermined characteristics.

In other examples, the trigger event can be a readout of another type of sensor of the analyzer. The other type of sensor can be one of the group consisting of a flow sensor, a temperature sensor, a humidity sensor and a liquid level sensor. For instance, a predetermined humidity or liquid level at a particular position of the analyzer (e.g., outside the fluid path) can be indicative of a leak. In other examples, a particular flow readout in the fluid path of the analyzer can be indicative of a clot or a leak.

In some examples, different trigger events (e.g., sensor readouts) can trigger either a clot detection routine, or a leak detection routine. In still other cases, a particular trigger event (e.g., a sensor readout) can trigger both a clot detection routine and a leak detection routine as described in the present disclosure.

In some examples, the clot detection or leak detection routine of the present disclosure can be triggered by an operator or other user. However, the routine itself is performed automatically (i.e., without user interaction).

In still other examples, the clot detection or leak detection routine of the present disclosure can be triggered as part of an execution of a particular workflow of the analyzer. For instance, the workflow can be a start-up workflow of the analyzer. In other examples, the workflow can be a shut-down workflow of the analyzer. In still other examples, the workflow can be a sample processing workflow (e.g., of a patient sample or a quality control sample). In still other examples, the workflow can be a maintenance or check-up workflow of the analyzer.

### Further processing clot or leak location information

As explained above, the technique of the present disclosure includes providing information regarding the identified location of the clot or leak for further processing. This further processing can be one or more of different actions.

In some examples, providing information regarding the identified location includes outputting the identified location on a user interface. For instance, the identified location can be output on a graphical user interface of the analyzer (e.g., as textual information "clot in capillary N" or in a visual representation of the fluid path of the analyzer). In some examples, the position can be indicated on a graphical representation of the fluid path of the analyzer.

In addition or alternatively, providing information regarding the identified location can include providing the information for further processing by a control routine of the analyzer. For instance, a controller might trigger an automated service or maintenance operation. This can include a clot removal operation (e.g., by purging a particular part of the fluid path).

In still other examples, information regarding a required service or maintenance operation can be presented to an operator or other user. For instance, a clot or leak in a particular position can require cleaning or replacing a component of the analyzer at this very position. This information can be conveyed to an operator or other user in some examples (e.g., "clean capillary N" or "replace capillary N").

As discussed above, a partial occlusion can be identified in some cases. In these cases, a controller can schedule a preventive maintenance operation as long as the partial occlusion still allows the analyzer to operate within specification.

The controller can also log the information regarding the identified location of the clot or leak or prepare a report including the information regarding the identified location of the clot or leak in some examples. The report can also include information regarding a required service or maintenance operation as discussed above.

In some examples, the analyzer repeats the clot or leak detection routine after a service or maintenance operation has been carried out.

### Further aspects of controlling valves to isolate parts of fluid path

It has been repeatedly discussed above that it can be advantageous to generate dead ends to isolate parts of the fluid paths of the analyzer to perform the technique of the present disclosure (particularly for leak detection). In some examples, the clot or leak detecting routine includes switching one or more valves of the analyzer to a closed position to isolate a particular part of the fluid part of the analyzer.

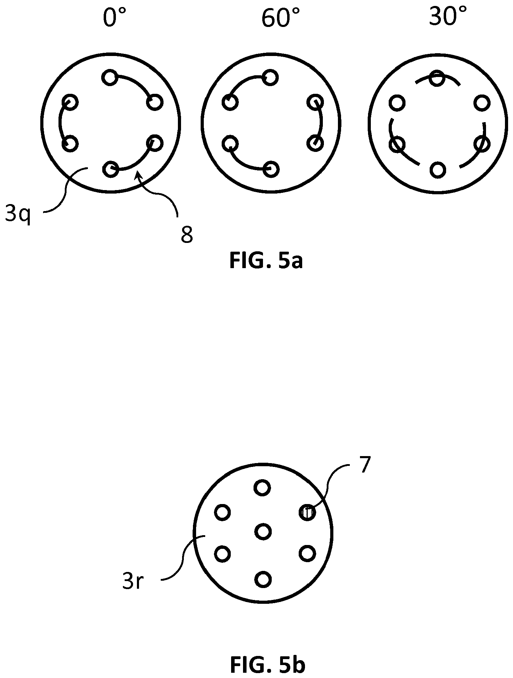

**FIG. 5a and 5b** illustrate how this can be done by controlling different valves frequently employed in analyzers including multiple LC streams.

**FIG. 5a** illustrates a rotary valve 3q having multiple input and output ports and multiple fluid channels which can bring two of the ports in fluid communication. For instance, the rotary valve 3q can include a rotatable disk 8 including two or more channels. Switching the rotary valve 3q to a closed position can include turning the rotary valve (e.g., the rotatable disk 8) to a position between a first position in which a first input port is connected to a first output port and a second position in which the first input port is connected to a second output port to block a particular part including the first input port.

In the example of **FIG. 5a****,** in a first position ("0°") each of the input ports of the rotary valve 3q is in fluid communication with a neighboring output port via the channels in the rotatable disk 8. In a second position ("60°") again each of the input ports of the rotary valve 3q is in fluid communication with a neighboring output port via the channels in the rotatable disk 8. However, the input ports are connected to different ones of the output ports in the second position. Now, the rotary disk 8 can be brought into an intermediate position ("30°) to block all ports of the rotary valve 3q. This can be used to generate the dead ends in the clot or leak detection routine of the present disclosure.

In other examples, a valve of the analyzer can be a multipath valve and switching the multipath valve to a closed position can include bringing the multipath valve into a position between a first position in which a first input port is connected to a first output port and a second position in which the first input port is connected to a second output port to block a particular part including the first input port. In FIG. 5b, the multipath valve 3r includes a dead end position 7 which can be connected to an input port or an output port to block the fluid path at this position.

### Computer-implementation

The present disclosure also relates to a computer system being configured to carry out the techniques of identifying a clot or a leak in an analyzer.

In some examples, the computer system can be a controller of the analyzer (or part thereof). However, in other examples, the computer system can be only connected to the analyzer through a network and not be part of the controller of the analyzer. For instance, the computer system can be a hospital or laboratory management system, or a computer system of a vendor or service provider of the analyzers.

It is merely required that the computer system obtains the time series of values indicative of pressures inside the container of the degasser. This can mean that the computing system receives this information over a network. However, in other examples, as discussed above, the computing system also controls functions of the analyzer (e.g., measuring pressures or triggering responses) which means that it the controller of the analyzer.

The computing systems of the present disclosure are not limited to a particular software or hardware configuration. As long as a software or hardware configuration is capable of carrying out the steps of the techniques for detecting and/or monitoring a state of a degasser of an analyzer according to the present disclosure the computing system can have this software or hardware configuration.

The present disclosure also relates to a computer-readable medium having instructions stored thereon which when carried out by a computer system prompt the computer system to carry out the steps of the techniques for detecting and/or monitoring a state of a degasser of an analyzer according to the present disclosure.

Further disclosed and proposed is a computer program including computer-executable instructions for performing the method according to the present disclosure in one or more of the embodiments enclosed herein when the program is executed on a computer or computer network. Specifically, the computer program may be stored on a computer-readable data carrier. Thus, specifically, one, more than one or even all of method steps as disclosed herein may be performed by using a computer or a computer network, preferably by using a computer program.

Further disclosed and proposed is a computer program product having program code, in order to perform the method according to the present disclosure in one or more of the embodiments enclosed herein when the program is executed on a computer or computer network. Specifically, the program code may be stored on a computer-readable data carrier.

Further disclosed and proposed is a data carrier having a data structure stored thereon, which, after loading into a computer or computer network, such as into a working memory or main memory of the computer or computer network, may execute the method according to one or more of the embodiments disclosed herein.

Further disclosed and proposed is a computer program product with program code stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier. Specifically, the computer program product may be distributed over a data network.

Further disclosed and proposed is a modulated data signal which contains instructions readable by a computer system or computer network, for performing the method according to one or more of the embodiments disclosed herein.

Referring to the computer-implemented aspects of the present disclosure, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing measurements.

Further disclosed and proposed is a computer, or computer network, comprising at least one processor, wherein the processor is adapted to perform the method according to one of the embodiments described in this description.

Further disclosed and proposed is a computer loadable data structure that is adapted to perform the method according to one of the embodiments described in this description while the data structure is being executed on a computer.

Further disclosed and proposed is a storage medium, wherein a data structure is stored on the storage medium and wherein the data structure is adapted to perform the method according to one of the embodiments described in this description after having been loaded into a main and/or working storage of a computer or of a computer network.

## Claims

1. An automated method for identifying a clot or a leak in an analyzer (200; 400) including multiple liquid chromatography (LC) streams, the method comprising:
obtaining (101) an indication of a trigger event for a clot or leak detection routine; starting (103) a clot or leak detecting routine in response to the trigger event,
wherein the clot or leak detecting routine is designed to identify a location of the clot or leak out multiple possible positions by using one or more sensors of the analyzer; and
providing (105) information regarding the identified location of the clot or leak for further processing,
wherein the clot or leak detecting routine includes isolating a first part (7a; 40a) of a fluid path (7) of the analyzer (200; 400)
**characterized in that** the clot or leak detection routine further includes sequentially increasing the isolated part by adding further parts (7b; 40b-c) of the fluid path (7) and
wherein the clot or leak detecting routine includes switching one or more valves (3c; 3d; 3h; 3m; 3p; 3q) of the analyzer to a closed position to isolate a particular part of the fluid part of the analyzer, wherein one of the one or more valves is a rotary valve and switching the valve to a closed position includes turning the rotary valve to a position between a first position in which a first input port is connected to a first output port and a second position in which the first input port is connected to a second output port to block a particular part including the first input port.

2. The method of claim 1, wherein the clot or leak detecting routine includes switching multiple valves (3a-r) of the analyzer (200; 400) in a predetermined order and measuring pressure values by using at least one of the one or more sensors at different positions of the analyzer for different switching states of the multiple switches.

3. The method of any one of the preceding claims 1 or 2, wherein the analyzer includes multiple pumps (1a-g), wherein the clot or leak detecting routine includes activating different ones of the multiple pumps (1a-g) sequentially to pressurize different parts (7a; 7b; 40a-c) of the analyzer (200; 400), optionally wherein the pumps include multiple loading pumps (1a; 1b; 1d; 1e; 1f) for leading a sample into the analyzer and/or multiple elution pumps (1c; 1g) for transporting an eluate from a LC stream to a detector (5; 5a).

4. The method of any one of the preceding claims 1 to 3, wherein the clot or leak detecting routine includes sequentially isolating (107) different parts (7a; 7b; 40a-c) of a fluid path (7) of the analyzer (200; 400).

5. The method of any one of the preceding claims 1 to 3, wherein the first part includes a pressure sensor of the one or more sensors of the analyzer (200; 400).

6. The method of claim 4 or claim 5, wherein the sequential isolation and/or adding includes switching valves (3a-r) of the analyzer (200; 400) so that the respective isolated parts (7a; 7b; 40a-c) of a fluid path (7) of the analyzer can be pressurized, and wherein the clot or leak detecting routine includes sequentially pressurizing (109) the respective isolated parts and sensing (111) a pressure in the respective isolated parts (7a; 7b; 40a-c) to detect a clot or leak.

7. The method of claim 4 to 6, wherein the sequential isolation and/or adding includes switching valves (3a-r) of the analyzer (200; 400) so that a clot or a leak in a predetermined part (7a; 7b; 40a-c) of a fluid path (7) of the analyzer (200; 400) would lead to a particular behavior when the part (7a; 7b; 40a-c) of the fluid path (7) is pressurized.

8. The method of claim 7, wherein the particular behavior is a pressure rise above a predetermined threshold or a pressure drop below a predetermined threshold.

9. The method of any one of claims 4 to 8, wherein sequentially isolating and/or adding parts (7a; 7b; 40a-c) of the fluid path (7) of the analyzer (200; 400) includes starting with an injection part for a sample of the analyzer and continuing with other parts downstream of the injection part.

10. The method of any one of claims 4 to 8, wherein sequentially isolating and/or adding different parts (7a; 7b; 40a-c) of the fluid path (7) of analyzer (200; 400) includes starting with a part adjacent to a detector (5; 5a) of the analyzer and continuing with other parts upstream of the part adjacent to the detector (5; 5a).

11. The method of any one of claims 1 to 10, wherein the trigger event is that a pressure in the analyzer is abnormal, wherein the abnormal pressure is a pressure crossing a predetermined upper or lower limit.

12. The method of any one of the preceding claims 1 to 10, wherein providing information regarding the identified location includes providing the information for further processing by a control routine of the analyzer, optionally wherein the control routine includes a clot removal operation.

13. A computing system being configured to perform the steps of any of the methods of claims 1 to 12, optionally wherein the computing system is a controller of the analyzer including multiple liquid chromatography (LC) streams

14. A computer-readable medium including instructions stored thereon which when executed by a computing system prompt the computing system to carry out the steps of any one of the methods of claims 1 to 12.

## Patentansprüche

1. Automatisiertes Verfahren zum Identifizieren einer Verklumpung oder eines Lecks in einem Analysator (200; 400), der mehrere Flüssigchromatographie(LC)-Ströme enthält, wobei das Verfahren umfasst:
Erhalten (101) eines Hinweises auf ein Auslöseereignis für eine Verklumpung- oder Leckerkennungsroutine;
Starten (103) einer Verklumpung- oder Leckerkennungsroutine als Reaktion auf das Auslöseereignis,
wobei die Verklumpung- oder Leckerkennungsroutine dazu ausgelegt ist, durch Verwendung einer oder mehrerer Sensoren des Analysators einen Ort der Verklumpung oder des Lecks aus mehreren möglichen Positionen zu identifizieren; und
Bereitstellen (105) von Informationen über den identifizierten Ort der Verklumpung oder des Lecks zur weiteren Verarbeitung,
wobei die Verklumpung- oder Leckerkennungsroutine das Isolieren eines ersten Teils (7a; 40a) eines Fluidweges (7) des Analysators (200; 400) beinhaltet, **dadurch gekennzeichnet, dass** die Verklumpung- oder Leckerkennungsroutine ferner das sequentielle Vergrößern des isolierten Teils durch Hinzufügen weiterer Teile (7b; 40b-c) des Fluidweges (7) beinhaltet, und wobei die Verklumpung- oder Leckerkennungsroutine das Schalten eines oder mehrerer Ventile (3c; 3d; 3h; 3m; 3p; 3q) des Analysators in eine geschlossene Stellung zu beinhaltet, um einen bestimmten Teil des Fluidteils des Analysators zu isolieren, wobei eines des einen oder der mehreren Ventile ein Drehventil ist und das Schalten des Ventils in eine geschlossene Stellung das Drehen des Drehventils in eine Stellung zwischen einer ersten Stellung, in der ein erster Eingangsanschluss mit einem ersten Ausgangsanschluss verbunden ist, und einer zweiten Stellung, in der der erste Eingangsanschluss mit einem zweiten Ausgangsanschluss verbunden ist, beinhaltet, um einen bestimmten Teil einschließlich des ersten Eingangsanschlusses zu sperren.

2. Verfahren gemäß Anspruch 1, wobei die Verklumpung- oder Leckerkennungsroutine das Schalten mehrerer Ventile (3a-r) des Analysators (200; 400) in einer vorbestimmten Reihenfolge und das Messen von Druckwerten unter Verwendung mindestens eines des einen oder der mehreren Sensoren an verschiedenen Positionen des Analysators für verschiedene Schaltzustände der mehreren Schalter beinhaltet.

3. Verfahren gemäß einem der vorhergehenden Ansprüche 1 oder 2, wobei der Analysator mehrere Pumpen (1a-g) enthält, wobei die Verklumpung- oder Leckerkennungsroutine das aufeinanderfolgende Aktivieren verschiedener der mehreren Pumpen (1a-g) umfasst, um verschiedene Teile (7a; 7b; 40a-c) des Analysators (200; 400) mit Druck zu beaufschlagen, wobei die Pumpen gegebenenfalls mehrere Ladepumpen (1a; 1b; 1d; 1e; 1f) zum Leiten einer Probe in den Analysator und/oder mehrere Elutionspumpen (1c; 1g) zum Transportieren eines Eluats von einem LC-Strom zu einem Detektor (5; 5a) enthalten.

4. Verfahren gemäß einem der vorhergehenden Ansprüche 1 bis 3, wobei die Verklumpung- oder Leckerkennungsroutine das aufeinanderfolgende Isolieren (107) verschiedener Teile (7a; 7b; 40a-c) eines Fluidweges (7) des Analysators (200; 400) umfasst.

5. Verfahren gemäß einem der vorhergehenden Ansprüche 1 bis 3, wobei der erste Teil einen Drucksensor des einen oder der mehreren Sensoren des Analysators (200; 400) enthält.

6. Verfahren gemäß Anspruch 4 oder Anspruch 5, wobei das sequentielle Isolieren und/oder Hinzufügen das Schalten von Ventilen (3a-r) des Analysators (200; 400) beinhaltet, sodass die jeweiligen isolierten Teile (7a; 7b; 40a-c) eines Fluidweges (7) des Analysators mit Druck beaufschlagt werden können, und wobei die Verklumpung- oder Leckerkennungsroutine das sequentielle mit Druck Beaufschlagen (109) der jeweiligen isolierten Teile und das Erfassen (111) eines Drucks in den jeweiligen isolierten Teilen (7a; 7b; 40a-c) beinhaltet, um eine Verklumpung oder ein Leck zu erkennen.

7. Verfahren gemäß einem der Ansprüche 4 bis 6, wobei das sequentielle Isolieren und/oder Hinzufügen das Schalten von Ventilen (3a-r) des Analysators (200; 400) beinhaltet, sodass ein Gerinnsel oder ein Leck in einem vorbestimmten Teil (7a; 7b; 40a-c) eines Fluidweges (7) des Analysators (200; 400) zu einem besonderen Verhalten führen würde, wenn der Teil (7a; 7b; 40a-c) des Fluidweges (7) mit Druck beaufschlagt wird.

8. Verfahren gemäß Anspruch 7, wobei das besondere Verhalten ein Druckanstieg über einen vorgegebenen Schwellenwert oder ein Druckabfall unter einen vorgegebenen Schwellenwert ist.

9. Verfahren gemäß einem der Ansprüche 4 bis 8, wobei das sequentielle Isolieren und/oder Hinzufügen von Teilen (7a; 7b; 40a-c) des Fluidweges (7) des Analysators (200; 400) das Beginnen mit einem Injektionsteil für eine Probe des Analysators und das Fortsetzen mit anderen Teilen stromabwärts des Injektionsteils beinhaltet.

10. Verfahren gemäß einem der Ansprüche 4 bis 8, wobei das sequentielle Isolieren und/oder Hinzufügen verschiedener Teile (7a; 7b; 40a-c) des Fluidweges (7) des Analysators (200; 400) das Beginnen mit einem an einen Detektor (5; 5a) des Analysators angrenzenden Teil und das Fortsetzen mit anderen Teilen stromaufwärts des an den Detektor (5; 5a) angrenzenden Teils beinhaltet.

11. Verfahren gemäß einem der Ansprüche 1 bis 10, wobei das Auslöseereignis darin besteht, dass ein Druck in dem Analysator anormal ist, wobei der anormale Druck ein Druck ist, der eine vorbestimmte obere oder untere Grenze überschreitet.

12. Verfahren gemäß einem der vorhergehenden Ansprüche 1 bis 10, wobei das Bereitstellen von Informationen bezüglich des identifizierten Ortes das Bereitstellen der Informationen für die weitere Verarbeitung durch eine Steuerungsroutine des Analysators beinhaltet, wobei die Steuerungsroutine gegebenenfalls einen Verklumpungsentfernungsvorgang beinhaltet.

13. Computersystem, das dazu ausgelegt ist, die Schritte eines der Verfahren gemäß den Ansprüchen 1 bis 12 durchzuführen, wobei das Computersystem gegebenenfalls eine Steuereinrichtung des Analysators ist, der mehrere Flüssigchromatographie(LC)-Ströme enthält.

14. Computerlesbares Medium mit darauf gespeicherten Anweisungen, die beim Ausführen durch ein Computersystem das Computersystem veranlassen, die Schritte eines der Verfahren gemäß den Ansprüchen 1 bis 12 auszuführen.

## Revendications

1. Procédé automatisé pour identifier un caillot ou une fuite dans un analyseur (200 ; 400) incluant plusieurs flux de chromatographie en phase liquide (LC), le procédé comprenant :
l'obtention (101) d'une indication d'un événement déclencheur pour une routine de détection de caillot ou de fuite ;
le démarrage (103) d'une routine de détection de caillot ou de fuite en réponse à l'événement déclencheur,
dans lequel la routine de détection de caillot ou de fuite est conçue pour identifier un emplacement du caillot ou de la fuite parmi plusieurs positions possibles en utilisant un ou plusieurs capteurs de l'analyseur ; et
la fourniture (105) d'informations concernant l'emplacement identifié du caillot ou de la fuite pour un traitement ultérieur,
dans lequel la routine de détection de caillot ou de fuite inclut l'isolement d'une première partie (7a ; 40a) d'un trajet de fluide (7) de l'analyseur (200 ; 400),
**caractérisé en ce que** la routine de détection de caillot ou de fuite inclut en outre l'augmentation de manière séquentielle de la partie isolée en ajoutant d'autres parties (7b ; 40b-c) du trajet de fluide (7) et dans lequel la routine de détection de caillot ou de fuite inclut la commutation d'une ou plusieurs vannes (3c ; 3d ; 3h ; 3m ; 3p ; 3q) de l'analyseur vers une position fermée pour isoler une partie particulière de la partie de fluide de l'analyseur, dans lequel l'une des une ou plusieurs vannes est une vanne rotative et la commutation de la vanne vers une position fermée inclut la rotation de la vanne rotative vers une position entre une première position dans laquelle un premier orifice d'entrée est relié à un premier orifice de sortie et une seconde position dans laquelle le premier orifice d'entrée est relié à un second orifice de sortie pour bloquer une partie particulière incluant le premier orifice d'entrée.

2. Procédé selon la revendication 1, dans lequel la routine de détection de caillot ou de fuite inclut la commutation de plusieurs vannes (3a-r) de l'analyseur (200 ; 400) dans un ordre prédéterminé et la mesure de valeurs de pression en utilisant au moins l'un des un ou plusieurs capteurs au niveau de différentes positions de l'analyseur pour différents états de commutation des plusieurs commutateurs.

3. Procédé selon l'une quelconque des revendications précédentes 1 ou 2, dans lequel l'analyseur inclut plusieurs pompes (1a-g), dans lequel la routine de détection de caillot ou de fuite inclut l'activation de différentes pompes parmi les plusieurs pompes (1a-g) de manière séquentielle pour mettre sous pression différentes parties (7a ; 7b ; 40a-c) de l'analyseur (200 ; 400), facultativement dans lequel les pompes incluent plusieurs pompes de chargement (1a ; 1b ; 1d ; 1e; 1f) pour diriger un échantillon dans l'analyseur et/ou plusieurs pompes d'élution (1c ; 1g) pour transporter un éluat d'un flux de LC vers un détecteur (5 ; 5a).

4. Procédé selon l'une quelconque des revendications précédentes 1 à 3, dans lequel la routine de détection de caillot ou de fuite inclut l'isolement de manière séquentielle (107) de différentes parties (7a ; 7b ; 40a-c) d'un trajet de fluide (7) de l'analyseur (200 ; 400).

5. Procédé selon l'une quelconque des revendications précédentes 1 à 3, dans lequel la première partie inclut un capteur de pression des un ou plusieurs capteurs de l'analyseur (200 ; 400).

6. Procédé selon la revendication 4 ou la revendication 5, dans lequel l'isolement et/ou l'ajout séquentiel inclut la commutation de vannes (3a-r) de l'analyseur (200 ; 400) de sorte que les parties isolées (7a ; 7b ; 40a-c) respectives d'un trajet de fluide (7) de l'analyseur peuvent être mises sous pression, et dans lequel la routine de détection de caillot ou de fuite inclut la mise sous pression de manière séquentielle (109) des parties isolées respectives et la détection (111) d'une pression dans les parties isolées (7a ; 7b; 40a-c) respectives pour détecter un caillot ou une fuite.

7. Procédé selon la revendication 4 à 6, dans lequel l'isolement et/ou l'ajout séquentiel inclut la commutation de vannes (3a-r) de l'analyseur (200 ; 400) de sorte qu'un caillot ou une fuite dans une partie prédéterminée (7a ; 7b; 40a-c) d'un trajet de fluide (7) de l'analyseur (200 ; 400) entraînerait un comportement particulier lorsque la partie (7a ; 7b; 40a-c) du trajet de fluide (7) est sous pression.

8. Procédé selon la revendication 7, dans lequel le comportement particulier est une augmentation de pression au-dessus d'un seuil prédéterminé ou une chute de pression en dessous d'un seuil prédéterminé.

9. Procédé selon l'une quelconque des revendications 4 à 8, dans lequel l'isolement et/ou l'ajout de manière séquentielle de parties (7a ; 7b ; 40a-c) du trajet de fluide (7) de l'analyseur (200 ; 400) inclut de commencer avec une partie d'injection pour un échantillon de l'analyseur et de continuer avec d'autres parties en aval de la partie d'injection.

10. Procédé selon l'une quelconque des revendications 4 à 8, dans lequel l'isolement et/ou l'ajout de manière séquentielle de différentes parties (7a ; 7b ; 40a-c) du trajet de fluide (7) de l'analyseur (200 ; 400) inclut de commencer avec une partie adjacente à un détecteur (5 ; 5a) de l'analyseur et de continuer avec d'autres parties en amont de la partie adjacente au détecteur (5 ; 5a).

11. Procédé selon l'une quelconque des revendications 1 à 10, dans lequel l'événement déclencheur est qu'une pression dans l'analyseur est anormale, dans lequel la pression anormale est une pression franchissant une limite supérieure ou inférieure prédéterminée.

12. Procédé selon l'une quelconque des revendications précédentes 1 à 10, dans lequel la fourniture d'informations concernant l'emplacement identité inclut la fourniture des informations pour un traitement ultérieur par une routine de contrôle de l'analyseur, facultativement dans lequel la routine de contrôle inclut une opération de retrait de caillot.

13. Système informatique étant configuré pour réaliser les étapes selon l'un quelconque des procédés selon les revendications 1 à 12, facultativement dans lequel le système informatique est un dispositif de commande de l'analyseur incluant plusieurs flux de chromatographie en phase liquide (LC).

14. Support lisible par ordinateur incluant des instructions stockées sur celui-ci qui lorsqu'elles sont exécutées par un système informatique invitent le système informatique à réaliser les étapes selon l'un quelconque des procédés selon les revendications 1 à 12.
